# EUROPÄISCHE PATENTSCHRIFT

(11) **EP 1 122 102 B1**
(45) Veröffentlichungstag und Bekanntmachung des Hinweises auf die Patenterteilung: **29.11.2006**
(21) Anmeldenummer: 01101662.3
(22) Anmeldetag: 29.01.2001
(51) Int. Cl.: B60G 15/06

(54) **Federbein**
Suspension strut
Jambe de suspension

(30) Priorität: 04.02.2000 DE 10004945
(43) Veröffentlichungstag der Anmeldung: 08.08.2001
(73) Patentinhaber: Volkswagen Aktiengesellschaft, 38436 Wolfsburg (DE)
(72) Erfinder: Kreutz, Stephan, 30449 Hannover (DE); Reich, Michael, 38550 Isenbüttel (DE)

(56) Entgegenhaltungen:
- EP-A- 0 985 565
- DE-A- 3 619 942
- DE-A- 19 719 301
- FR-A- 2 759 752
- US-A- 3 953 010
- US-A- 5 133 573
- US-A- 5 248 134

## Beschreibung

Die Erfindung bezieht sich auf ein Federbein nach dem Oberbegriff von Patentanspruch 1, umfassend eine Schraubenfeder, einen Schwingungsdämpfer und einen Lagerkörper zur axialen Abstützung der Schraubenfeder und des Schwingungsdämpfers gegen einen Fahrzeugaufbau, wobei der Lagerkörper einen ersten, elastisch ausgebildeten Pufferabschnitt für die Schraubenfeder und einen zweiten, elastisch ausgebildeten Pufferabschnitt für den Schwingungsdämpfer aufweist und die Pufferabschnitte unabhängig voneinander arbeiten, wobei die Pufferabschnitte des Lagerkörpers untereinander verbunden sind, jedoch örtlich getrennt voneinander jeweils gegen den Fahrzeugaufbau anliegen, und wobei zur Befestigung des Federbeins an dem Fahrzeugaufbau der Schwingungsdämpfer mittels eines einzigen, zentralen Befestigungselementes mit dem Fahrzeugaufbau verspannbar ist.

Derartige Federbeine werden in Radaufhängungen von Kraftfahrzeugen verwendet.

Die Gestaltung von Federbeinen wird durch eine Vielzahl von zum Teil konkurrierenden Anforderungen bestimmt. So soll ein Federbein die Übertragung von an einem Fahrzeugrad auftretenden Stößen und Schwingungen auf den Fahrzeugaufbau möglichst gering halten und einen großen Dämpferweg zur Verfügung stellen. Andererseits ist im Hinblick auf den Einbau in ein Kraftfahrzeug zumeist eine kompakte Bauweise erwünscht.

Zudem soll das Federbein möglichst als Einheit an einem Fahrzeugaufbau anbringbar sein, um eine einfache und effiziente Montage zu gewährleisten. Hierbei ist unter anderem zu berücksichtigen, daß die Feder des Federbeins im Befestigungszustand vorgespannt ist. Bisweilen ist es auch erforderlich, das Federbein zu demontieren, um beispielsweise einen Schwingungsdämpfer desselben auszutauschen. In diesem Fall ist aus Sicherheitsgründen ein unkontrolliertes Entspannen der Feder zu verhindern.

Weiterhin sollen in dem Federbein Torsions- und Biegespannungen vermieden werden. Überdies ist auch das Entstehen von Quietsch- und Knarzgeräuschen zu unterbinden. Zudem sind an dem Federbein Maßnahmen zu treffen, die ein Aufsetzen der Fahrzeugkarosserie auf ein Fahrzeugrad verhindern.

Aus dem Stand der Technik ist dementsprechend eine große Anzahl von Federbeinen bekannt.

So wird beispielsweise in der DE 42 16 299 C2 ein Federbein vorgeschlagen, bei dem der Schwingungsdämpfer und eine koaxial zu diesem angeordnete Schraubenfeder an axial weit voneinander beabstandeten Abschnitten einer Fahrzeugkarosserie abgestützt sind. Dieser weite Abstand ist dort aus montagetechnischen Gründen erforderlich, um bei einer Demontage die Schraubenfeder axial zu sichern. Hierzu ist zwischen dem Schwingungsdämpfer und der Schraubenfeder eine hülsenartige Hilfseinrichtung aus mehreren Teilen erforderlich, die in einer ersten Lösung im Einbauzustand an dem Federbein verbleibt. Diese Hilfseinrichtung ist lediglich beim vollständigen Ausfedern wirksam. Sie verkompliziert den Aufbau und vergrößert die Abmessungen des Federbeins. In einer weiteren Lösung ist die Hilfseinrichtung als separates Montage-Hilfswerkzeug ausgebildet. Auch diese Lösung ist unbefriedigend, da das Hilfswerkzeug für eine Demontage eigens bereitgehalten werden muß.

Ein weiteres Federbein ist aus der DE 36 19 942 A1 bekannt. Bei diesem stützen sich die Schraubenfeder und eine Kolbenstange des Schwingungsdämpfers über ein gemeinsames elastisches Lager und einen zusätzlichen Lagerring an einem Fahrzeugaufbau ab. Der Lagerring wird hierbei an dem Fahrzeugaufbau befestigt. Dies bedeutet jedoch eine Kopplung der Feder- und Dämpferkräfte in dem gemeinsamen elastischen Lager.

Zur Entkopplung der Feder- und Dämpferkräfte wird in der EP 0 602 330 B1 ein Federbein der eingangs genannten Art vorgeschlagen, mit dem insbesondere die Nachgiebigkeit der Anlenkung des Dämpfers optimiert werden kann. Allerdings ist bei dem aus der EP 0 602 330 B1 bekannten Federbeinlager die Befestigung des Federbeins an einem Fahrzeugaufbau aufwendig.

Das bekannte Federbeinlager umfaßt einen Lagerkörper in Form einer steifen Lagerglocke mit einem großvolumigen Elastomerlager bzw. Puffer zur Abstützung der Kolbenstange des Dämpfers. Die Abstützung erlaubt dabei eine gewisse Winkelbeweglichkeit, um das Entstehen von Biegespannungen in dem Dämpfer gering zu halten. Gleichzeitig ist der Dämpfer über das Ende der Kolbenstange an der Lagerglocke befestigt. Die Schraubenfeder ist an einem weiteren, flanschartigen Abschnitt der Lagerglocke über einen elastischen Puffer abgestützt. Auch die Abstützung der Lagerglocke an einem Fahrzeugaufbau erfolgt über den flanschartigen Abschnitt, die zur Befestigung an dem Fahrzeugaufbau weiterhin angeschraubt werden muß. Da die Befestigung der Lagerglocke nur radial außerhalb des flanschartigen Abschnittes erfolgen kann, ergibt sich einerseits ein verhältnismäßig großer Durchmesser sowie andererseits die Notwendigkeit einer größeren Anzahl von Befestigungselementen, die bei einer Montage oder Demontage gehandhabt werden müssen.

Weiterhin ist aus der gattungsbildenden US 3,953,010 A ein Elastomerkörper bekannt, durch dessen besondere Ausformung zwei im wesentlichen getrennte Pufferabschnitte gebildet werden, welche die Kräfte des Dämpfers und der Schraubenfeder voneinander entkoppelt in den Fahrzeugaufbau einleiten. Jedoch erfordert auch die in der US 3,95 3,010 A vorgeschlagene Lösung eine aufwendige Montage und Demontage. Zwar lassen sich der Schwingungsdämpfer und die Schraubenfeder zu einer Baueinheit vormontieren und mittels einer Scheibe sowie eines Federtellers gegeneinander in einem zumindest teilweise vorgespannten Zustand sichern. Für die Montage des Federbeins muß anschließend jedoch der Elastomerkörper auf das Ende der Kolbenstange des Schwingungsdämpfers aufgesteckt und hernach in eine am Fahrzeugaufbau befindliche Öffnung eingeknöpft oder eingepresst werden. Erst danach kann das Federelement mittels einer Mutter am Fahrzeugaufbau befestigt werden.

Schließlich ist aus der FR 2 759 752 A1 bekannt, einen Schwingungsdämpfer und eine Schraubenfeder über einen Lagerkörper zu einer Baueinheit vorzumontieren, bei der der Lagerkörper einen Pufferkörper für die Schraubenfeder und einen weiteren Pufferkörper für den Schwingungsdämpfer aufweist. Der Lagerkörper enthält ein Versteifungselement, das mit dem Fahrzeugaufbau ein winkelbewegliches Gelenk bildet. Die Pufferkörper stützen sich dabei gegen das Versteifungselement ab, um die Winkelbeweglichkeit nicht zu beeinträchtigen.

Vor diesem Hintergrund liegt der Erfindung die Aufgabe zugrunde, ein Federbein zu schaffen, das bei einer kompakten Bauweise eine einfache Handhabung bei der Montage und Demontage sowie eine individuelle Einstellung der Nachgiebigkeit der Feder- und Dämpferabpufferung erlaubt und in dem Federbein Torsions- und Biegespannungen vermeidet.

Diese Aufgabe wird gelöst durch ein Federbein gemäß Patentanspruch 1 gelöst.

Das erfindungsgemäße Federbein zeichnet sich durch seinen montagegünstigen Aufbau aus. Bei der Montage oder Demontage wahrt der Lagerkörper die Integrität des Federbeins als Modul, das in einfachster Art und Weise über ein einziges, zentrales Befestigungselement an einem Fahrzeugaufbau festgelegt wird, ohne daß hierzu weitere Hilfseinrichtungen erforderlich wären. Die Abpufferung des Dämpfers und der Schraubenfeder läßt sich für jedes Element über den gemeinsamen Lagerkörper, jedoch separat und getrennt voneinander über eigene Pufferabschnitte vornehmen. Dies erlaubt eine Optimierung der fahrzeugseitigen Abstützung der Schraubenfeder und des Dämpfers.

Die beiden Pufferabschnitte können von zwei getrennten Bauteilen gebildet werden. Jedoch hält die Einbeziehung der Pufferabschnitte in einen gemeinsamen Lagerkörper Bauweise der Federbeinlagerung bei.

In einer vorteilhaften Ausgestaltung der Erfindung ist der Schwingungsdämpfer, der eine Kolbenstange und einen Zylinder umfaßt, mit der Kolbenstange gegen den zweiten Pufferabschnitt des Lagerkörpers abgestützt. Weiterhin ist die Kolbenstange mit dem Fahrzeugaufbau verspannbar. Hierdurch können die Abmessungen der aufbauseitigen Federbeinlagerung besonders gering gehalten und eine Winkelbeweglichkeit der aufbauseitigen Abstützung des Dämpfers erzielt werden.

Die Verspannung des Dämpfers kann prinzipiell unmittelbar über das zentrale Befestigungselement gegen einen Wandabschnitt des Fahrzeugaufbaus erfolgen. Vorzugsweise ist jedoch ein dem zweiten Pufferabschnitt des Lagerkörpers gegenüberliegend anzuordnender Gegenhalter vorgesehen, der ebenfalls einen elastisch ausgebildeten Pufferabschnitt aufweist. Im Befestigungszustand an einem Fahrzeugaufbau werden der zweite Pufferabschnitt des Lagerkörpers und der Pufferabschnitt des Gegenhalters von gegenüberliegenden Seiten gegen den aufbauseitigen Wandabschnitt angelegt und mittels des zentralen Befestigungselementes verspannt. Damit läßt sich für die Abstützung des Dämpfers eine Abpufferung sowohl in Druckrichtung als auch in Zugrichtung verwirklichen. Aufgrund der Verwendung von zwei unterschiedlichen Pufferabschnitten können die Nachgiebigkeiten in Druckrichtung und Zugrichtung individuell ausgelegt werden, um die aufbauseitige Abstützung des Schwingungsdämpfers zu optimieren.

Zur Verbesserung der Krafteinleitung einer Dämpferkraft in einen Wandabschnitt des Fahrzeugaufbaus weist der Lagerkörper im Bereich des zweiten Pufferabschnittes einen Stützkörper auf, über den der Lagerkörper an dem Dämpfer axial festgelegt ist. Damit läßt sich eine breitere aufbauseitige Abstützung realisieren, wobei der Stützkörper zur Einleitung der Dämpferkräfte in den zweiten Pufferabschnitt erheblich steifer als dieser ausgebildet ist. Dies ist insbesondere dann vorteilhaft, wenn die Anlenkung des Dämpfers über die Kolbenstange erfolgt. Vorzugsweise besteht der Stützkörper aus Metal. Die unmittelbare Festlegung des Lagerkörpers an dem Dämpfer bleibt so kompakt. Durch eine zusätzliche Befestigung des Lagerkörpers an dem Dämpfer, die bei einer Demontage des Federbein-Moduls zunächst erhalten bleibt, kann auf eine einfache Art und Weise auch eine Sicherung der Schraubenfeder bewirkt werden.

Aus den gleichen Gründen wird auch der Gegenhalter bevorzugt mit einem Stützkörper, vorzugsweise aus Metall, ausgebildet, an dem der Pufferabschnitt des Gegenhalters befestigt ist, und gegen den im Befestigungszustand das zentrale Befestigungselement anliegt. Der steife Stützkörper verbreitert auch hier die Basis der Krafteinleitung, so daß diese nicht lediglich auf die Größe des Befestigungselementes beschränkt bleiben muß. Die Stützkörper können in ihrer Form identisch sein.

Für eine kompakte und kostengünstige Bauweise ist es vorteilhaft, Pufferabschnitte aus Elastomermaterial einzusetzen. Andere Werkstoffe, z. B. Cellasto, sind ebenfalls möglich.

In einer weiteren, vorteilhaften Ausgestaltung ist das zentrale Befestigungselement eine Mutter, die auf ein Ende einer Kolbenstange des Dämpfers aufgeschraubt wird. Damit wird der Aufwand zur lösbaren Befestigung des Federbeins sehr gering. Insbesondere kann die Montage und Demontage des Federbeins mit handelsüblichen und weitverbreiteten Werkzeugen durchgeführt werden. Eigens anzufertigende Spezialwerkzeuge sind dann nicht notwendig.

Vorzugsweise erstreckt sich die Kolbenstange durch die Stützkörper des Lagerkörpers und des Gegenhalters hindurch. Zudem ist zwischen den Stützkörpern ein Distanzstück eingegliedert. Hierdurch wird eine besonders einfache Einstellung der Spannkräfte in dem Dämpferlager ermöglicht, da das zentrale Befestigungselement lediglich anzuziehen ist, bis der Lagerkörper und der Gegenhalter mit ihren Stützkörpern gegen das Distanzstück anliegen. Über das Distanzstück wird das Ausmaß der Vorverformung der gegeneinander verspannten Pufferabschnitte bestimmt. Andererseits kann das Befestigungselement zur sicheren Befestigung der Stützkörper mit einer hierzu erforderlichen, höheren Vorspannkraft angezogen werden, die unabhängig von den Spannkräften in dem Dämpferlager, d. h. in den zugehörigen Pufferabschnitten ist.

In einer weiteren, vorteilhaften Ausgestaltung der Erfindung sind der zweite Pufferabschnitt des Lagerkörpers und/oder der Pufferabschnitt des Gegenhalters an ihrer Anlagefläche zur Abstützung gegen den Fahrzeugaufbau mit Ausnehmungen und/oder Vorsprüngen ausgebildet. Damit läßt sich für jeden Pufferabschnitt eine eigene Federkennlinie einstellen, die je nach den Erfordernissen nicht notwendigerweise linear sein muß, sondern durch die Ausbildung von Ausnehmungen und/oder Vorsprüngen auch beispielsweise progressive oder degressiv sein kann.

Bevorzugt sind die beiden Pufferabschnitte des Lagerkörpers über eine Wandung aus Elastomermaterial miteinander verbunden, die durch ein Versteifungselement, vorzugsweise aus Metall, verstärkt ist. Damit kann der Lagerkörper einfach als Gummikörper aus Elastomermaterial hergestellt werden, andererseits wird eine ausreichende Festigkeit gewährleistet, die bei der Montage oder Demontage die Schraubenfeder zuverlässig sichert.

Für gelenkte McPherson-Federbeine muß die Drehbarkeit des Rades gegenüber der Karosserie gewährleistet sein. Vorzugsweise geschieht dies über ein Axial-Lager, das zwischen der Schraubenfeder und dem ersten Pufferabschnitt liegt.

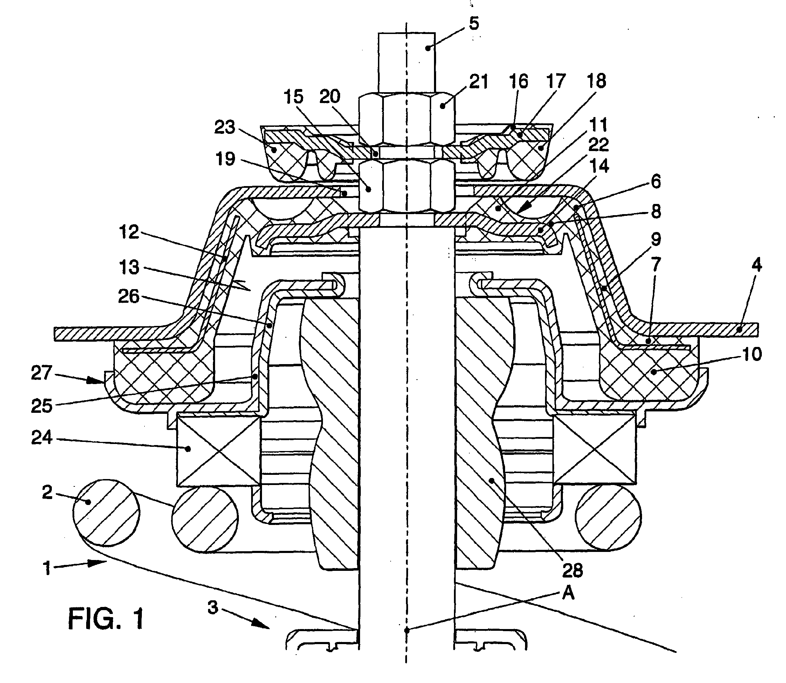

Die Erfindung wird nachfolgend anhand eines in der Zeichnung dargestellten Ausführungsbeispiels näher erläutert. Die Zeichnung zeigt in
- Figur 1: ein Ausführungsbeispiel eines Federbeins in einer Schnittdarstellung, wobei hier lediglich die aufbauseitige Federbeinlagerung abgebildet ist.

Das Ausführungsbeispiel zeigt ein gegebenenfalls lenkbares Federbein 1 mit einer Schraubenfeder 2 und einem Schwingungsdämpfer 3, die in für einen Fachmann bekannter Art und Weise koaxial zueinander angeordnet sind, aber auch exzentrisch angeordnet werden können. In Figur 1 daher sind lediglich die Enden der Schraubenfeder 2 und der Schwingungsdämpfer 3 dargestellt, über welche die Abstützung gegen einen Wandabschnitt 4 eines Fahrzeugaufbaus erfolgt.

Der Schwingungsdämpfer 3 umfaßt einen hier nicht abgebildeten Zylinder sowie eine Kolbenstange 5, die in den Zylinder eintaucht. In dem dargestellten Ausführungsbeispiel erfolgt die aufbauseitige Abstützung des Schwingungsdämpfers 3 über ein oberes Ende der Kolbenstange 5. Prinzipiell ist es jedoch auch möglich, den Schwingungsdämpfer 3 umzudrehen und über seinen Zylinder an dem Fahrzeugaufbau abzustützen.

In Figur 1 ist weiterhin ein Lagerkörper 6 zu erkennen, der in Axialrichtung des Federbeins 1 zwischen der Schraubenfeder 2 und dem Schwingungsdämpfer 3 einerseits und dem Wandabschnitt 4 des Fahrzeugaufbaus andererseits eingegliedert ist. Der Lagerkörper 6 ist napfförmig ausgebildet, und kann sowohl axiale als auch radiale Kräfte aufnehmen. Er weist einen flanschartigen Randabschnitt 7 und eine im wesentlichen flache Bodenwand 8 auf, die über eine Wandung 9 in Form einer geneigten, sich zu dem flanschartigen Randabschnitt 7 erweiternden Seitenwand miteinander verbunden sind.

An dem flanschartigen Randabschnitt 7 des Lagerkörpers 6 ist ein erster, elastisch ausgebildeter Pufferabschnitt 10 vorgesehen, über den eine Abstützkraft der Schraubenfeder 2 und einer weiter unter noch näher zu erläuternden Zusatzfeder 28 in den Wandabschnitt 4 des Fahrzeugaufbaus eingeleitet wird. Weiterhin ist an dem Bodenabschnitt 8 des Lagerkörpers 6 ein zweiter, elastisch ausgebildeter Pufferabschnitt 11 vorgesehen, über den eine axiale Druckkraft des Schwingungsdämpfers 3 in den Wandabschnitt 4 eingeleitet wird. Die beiden Pufferabschnitte 10 und 11 sind hierbei parallel geschaltet, so daß die Krafteinleitung der Schraubenfeder 2 und des Schwingungsdämpfers 3 in dem Wandabschnitt 4 voneinander getrennt und damit entkoppelt erfolgt. Die zwischen den beiden Pufferabschnitten 10 und 11 verlaufende Wandung 9 dient lediglich der Verbindung der Pufferabschnitte, ohne daß damit eine merkliche mechanische Kopplung der Elastizitäten verbunden wäre. Vielmehr ist für die Auslegung der Abpufferung der Schraubenfeder 2 lediglich der erste Pufferabschnitt 10 zu dimensionieren, wohingegen die Abpufferung des Schwingungsdämpfers 3 allein über den zweiten Pufferabschnitt 11 erfolgt. Die Pufferabschnitte 10 und 11 können aber auch vollständig getrennt voneinander in mehreren Bauteilen ausgeführt werden.

Der Lagerkörper 6 ist aus einem Elastomermaterial hergestellt, so daß insbesondere die beiden Pufferabschnitte 10 und 11 als kompakte Elastomerelement zur Verfügung stehen. Wie Figur 1 entnommen werden kann, liegt hier der gesamte Lagerkörper 6 ausschließlich über Elastomerabschnitte gegen den Wandabschnitt 4 des Fahrzeugaufbaus an. Ein metallischer Kontakt zwischen dem Wandabschnitt 4 und Teilen des Federbeins 1, der zu Quietsch- oder Knarzgeräuschen führen könnte, ist damit vermieden. Überdies ist der Lagerkörper 6 in seiner Kontur dem Wandabschnitt 4 an dem Fahrzeugaufbau nachgebildet, um eine breitflächige Anlage zu ermöglichen. Über die Napfform wird eine Zentrierung gegenüber dem Fahrzeugaufbau erreicht. Für die genaue Außenform des Lagerkörpers 6 wird hier ausdrücklich auf die Figur 1 verwiesen.

Zur Versteifung des Lagerkörpers 6 ist dieser mit mehreren Stütz- bzw. Versteifungselementen verstärkt. So ist an der Wandung 9 ein Versteifungselement 12 vorgesehen, das sich bis in den ersten Pufferabschnitt 10 erstreckt. Dieses Versteifungselement 12 ist hier ein Blechring, mit einem im Querschnitt in etwa L-förmigen Profil, wobei ein Arm sich im wesentlichen über die gesamte Länge der geneigten Wandung 9 erstreckt und der andere Arm in den ersten Pufferabschnitt 10 hineinragt. Das Versteifungselement 12 kann von Elastomermaterial voll eingeschlossen werden. Dies hat den Vorteil, daß die Innenseite 13 der Wandung 9, welche dem Wandabschnitt 4 des Fahrzeugaufbaus gegenüberliegt, als zentrierende Anschlagfläche für Abschnitte des Federbeins 1 genutzt werden kann, beispielsweise dann, wenn das Federbein 1 vollkommen einfedert.

Im Bereich des zweiten Pufferabschnittes 11 ist ein Stützkörper 14 an dem Lagerkörper 6 vorgesehen. Dieser Stützkörper 14 ist im wesentlichen scheibenförmig ausgebildet und erstreckt sich im wesentlichen quer zu der Längsmittelachse A des Federbeins 1. Wie das Versteifungselement 12 ist hier auch der Stützkörper 14 ein Metall-Blechteil. Der Stützkörper 14 erstreckt sich im wesentlichen über die gesamte Bodenwand 8 des Lagerkörpers 6, wobei sich der zweite Pufferabschnitt 11 an der zu dem Wandabschnitt 4 weisenden Seite befindet. Auch die gegenüberliegende Seite des Stützkörpers 14 ist zumindest teilweise, vorzugsweise aber vollständig mit Elastomermaterial bedeckt, um einen metallischen Anschlag beim Einfedern des Federbeins 1 zu vermeiden.

Wie Figur 1 weiter entnommen werden kann, ist der Lagerkörper 6 über einen zentralen Abschnitt des Stützkörpers 14 an der Kolbenstange 5 axial festgelegt und gesichert. Die Kolbenstange 5 weist hierzu eine Schulter auf, gegen die der zentrale Abschnitt des Stützkörpers 14 mittels eines weiter unten in seiner Funktion noch näher zu erläuternden Distanzstückes 15 in Form einer genormten Mutter verspannt ist. Bei einem Einbau oder Ausbau des Federbeins 1 an einer Kraftfahrzeug-Radaufhängung bleibt der Stützkörper 14 zunächst mit der Kolbenstange 5 verspannt. Damit sichert der Lagerkörper 6 die Schraubenfeder 2 zuverlässig gegen eine vollständige Entspannung. Im ausgebauten Zustand wird die Restvorspannkraft der Schraubenfeder 2 durch den Stützkörper 14 aufgenommen. Durch das Versteifungselement 12 wird ein Umstülpen des Lagerkörpers 6 zuverlässig verhindert. Damit kann die Wandung 9 dünn ausgebildet werden. Dies trägt zu einer kompakten Bauform der Federbeinlagerung bei.

Gegenüber dem Lagerkörper 6 ist ein Gegenhalter 16 auf der anderen Seite des Wandabschnittes 4 vorgesehen. Dieser Gegenhalter 16 umfaßt wiederum einen steifen Stützkörper 17 und einen mit dem Stützkörper 17 verbundenen Pufferabschnitt 18 aus einem elastisch Material. Der Stützkörper 17 ist ebenfalls scheibenförmig ausgebildet und hier ein Metall-Blechteil. Auch der Gegenhalter 16 wird an dem Schwingungsdämpfer 3, hier dem oberen Ende der Kolbenstange 5 befestigt. Allerdings muß zuvor das Ende der Kolbenstange 5 durch eine an dem Wandabschnitt 4 ausgebildete Öffnung 19 hindurchgeführt werden. Hernach wird der Gegenhalter 16 von der Rückseite des Wandabschnittes 4 auf das Ende der Kolbenstange 5 aufgesteckt, wozu der Gegenhalter 16 eine entsprechende Durchgangsöffnung 20 aufweist. Anstelle der Durchgangsöffnung 20 kann der Gegenhalter 16 auch mit einem Gewinde ausgebildet und direkt auf die Kolbenstange 5 aufgeschraubt werden.

Im Befestigungszustand können der Pufferabschnitt 18 des Gegenhalters 16 und der zweite Pufferabschnitt 11 des Lagerkörpers 6 beidseits gegen den Wandabschnitt 4 anliegen. Der Gegenhalter 16 stützt sich dabei mit einem zentralen Abschnitt an dem Distanzstück 15 ab und ist auf der gegenüberliegenden Seite mittels eines zentralen Befestigungselementes 21 gegen das Distanzstück 15 verspannt. Damit ist gleichzeitig die Kolbenstange 5 an dem Wandabschnitt 4 des Fahrzeugaufbaus befestigt. Das zentrale Befestigungselement 21 ist hier eine herkömmliche Mutter, die zur Befestigung des Federbeins 1 an dem Fahrzeugaufbau auf die Kolbenstange 5 aufgeschraubt wird. Sie ist hier das einzige Befestigungselement, das bei einer Montage oder Demontage des Federbeins 1 an dem Fahrzeugaufbau betätigt werden muß, so daß sich ein sehr einfacher Montageverlauf ergibt. Als Mutter kann beispielsweise eine genormte Mutter verwendet werden. Für den Ein- und Ausbau des Federbeins 1 genügt dann ein gängiges Werkzeug. Durch das Anziehen der Mutter wird das Federbein 1 über die Wandung 9 gegenüber dem Wandabschnitt 4 zentriert. Eine Verdrehung der Kolbenstange 5 beim Anziehen der Mutter wird durch Festhalten der Kolbenstange 5 vermieden, die hierzu an ihrem oberen Ende beispielsweise mit einer Ausnehmung in Form eines Innensechskants ausgebildet ist.

Es können jedoch auch andere zentrale Befestigungselemente verwendet werden. Beispielsweise ist es hier denkbar, ein Ende des Schwingungsdämpfers 3 mit einem Schraubbolzen zu sichern, wobei das Ende sowohl an der Kolbenstange 5 als auch, bei umgekehrter Anordnung des Schwingungsdämpfers 3, an einem Abschnitt des Zylinders liegen kann.

Vorzugsweise aber wird das Dämpferlager mit den beiden Pufferabschnitten 11 und 18 ausgeführt, so daß sich sowohl eine Abfederung in Zugrichtung als auch in Druckrichtung ergibt. Dabei können die Pufferabschnitte 11 und 18 des Dämpferlagers mit einer unterschiedlichen Elastizität ausgebildet werden. Beispielsweise können für die Pufferabschnitte unterschiedliche Elastomermaterialien zum Einsatz kommen, um das druckseitige Lager bzw. den Pufferabschnitt 11 weicher auszubilden, als das zugseitige Lager bzw. den Pufferabschnitt 18.

Überdies lassen sich die Federkennlinien der Pufferabschnitte 11 und 18 auch über ihre Formgebung individuell einstellen, in dem diese jeweils mit einer konturierten Anlagefläche gegen den Wandabschnitt 4 oder auch die Stützkörper 14 und 16 ausgebildet werden. Die Konturierung erfolgt beispielsweise durch an den Pufferabschnitten ausgebildete Vorsprünge oder Ausnehmungen. Auch können in den Pufferabschnitten zu diesem Zweck Hohlräume vorgesehen werden. Damit lassen sich insbesondere anfangs weichen Kennlinien realisieren, die mit zunehmender Verformung der Pufferabschnitte in definierter Art und Weise härter werden.

Bei dem in Figur 1 dargestellten Ausführungsbeispiel weist der zweite Pufferabschnitt 11 des Lagerkörpers 6 an seiner Anlagefläche zu dem Wandabschnitt 4 bogenförmige Ausnehmungen 22 auf. Diese können auch zu einer Ringnut miteinander verbunden sein.

Hingegen ist die Anlagefläche des Pufferabschnittes 18 des Gegenhalters 16 mit vorstehenden Noppen 23 ausgebildet, welche im Befestigungszustand gegen den Wandabschnitt 4 abgestützt sind. Auch die Noppen 23 können, gegebenenfalls in mehreren Reihen, in Umfangsrichtung miteinander verbunden sein und damit an dem Pufferabschnitt 18 Ringstege ausbilden.

Wie Figur 1 entnommen werden kann, ist ein definierter Kennlinienverlauf oder auch überhaupt eine Verformung der Pufferabschnitte nur möglich, wenn an diesen ein entsprechender Verformungsweg bereitgestellt wird. Andererseits ist eine sichere Befestigung der Kolbenstange 5 an dem Wandabschnitt 4 zu gewährleisten. Dies setzt eine hohe Spannkraft für die Befestigung der Stützkörper 14 und 17 voraus. Durch die Verwendung des bereits erwähnten Distanzstückes 15, das die Stützkörper 14 und 17 gegenüber der Kolbenstange 5 mechanisch kurzschließt, wird ein vollständiges Zusammendrücken der Pufferabschnitte 11 und 18 bei der Montage verhindert. Durch die Einstellung der Axiallänge des Distanzstückes 15 kann in Zusammenwirkung mit den Pufferabschnitten 11 und 18 und gegebenenfalls an diesen vorgesehenen Vorsprüngen und Ausnehmungen die Nachgiebigkeit des Dämpferlagers sehr genau und unabhängig von der Abstützung der Schraubenfeder 2 eingestellt werden. Hieraus resultiert ein beachtliches Optimierungspotential für eine Feinabstimmung der Federbeinlagerung.

Die Abstützung der Schraubenfeder 2 kann unmittelbar an dem ersten Pufferabschnitt 10 des Lagerkörpers 6 erfolgen. Bei dem dargestellten Ausführungsbeispiel ist jedoch zwischen dem ersten Pufferabschnitt 10 und der Schraubenfeder 2 ein Axial-Lager 24 eingegliedert, um Lenkbewegungen zu ermöglichen. Dieses Axial-Lager 24 kann ein Kugellager, Zylinderrollenlager oder auch ein Nadellager seien. Alternativ kann auch eine Gleitverbindungsvorgesehen werden.

Die Halterung des Lagers 24 erfolgt über einen Innentopf 25, der mit einem vertiefen Abschnitt 26 in Richtung des Lagerkörpers 6 vorragt. Das Lager 24 ist hingegen an einem radialen Randabschnitt 27 abgestützt, der sich in Axialrichtung zwischen der Schraubenfeder 2 und dem ersten Pufferabschnitt 10 befindet. Dadurch ist die Übertragung von radialen-Kräften möglich.

Der vertiefte Abschnitt 26 kann bei einem vollständigen Einfedern in Anlage gegen die Innenseite der Bodenwand 8 des Lagerkörpers 6 gelangen, sollte dann aber aus Gründen der Entkopplung das Dämpferlager nicht beeinflussen. Im ausgebauten Zustand wird die Restvorspannkraft der Schraubenfeder 2 durch den Kontakt des Stützkörpers 14 und des vertieften Abschnittes 26 aufgenommen.

Weiterhin ist an diesem auf der Seite zu dem Zylinder des Schwingungsdämpfers 3 ein großvolumige Zusatzfeder 28 abgestützt, der koaxial um die Kolbenstange 5 angeordnet ist. Bei einem starken oder vollständigen Einfedern stößt der Zylinder des Schwingungsdämpfers 3 gegen die Zusatzfeder 28, um den Stoß auf den Fahrzeugaufbau abzufangen. Die dabei auftretenden hohen Federkräfte werden über den Innentopf über den ersten Pufferabschnitt 10 der Schraubenfeder 2 geführt.

### BEZUGSZEICHENLISTE

- 1: Federbein
- 2: Schraubenfeder
- 3: Schwingungsdämpfer
- 4: Wandabschnitt des Fahrzeugaufbaus
- 5: Kolbenstange
- 6: Lagerkörper
- 7: flanschartiger Randabschnitt des Lagerkörpers
- 8: Bodenwand des Lagerkörpers
- 9: Wandung
- 10: erster Pufferabschnitt
- 11: zweiter Pufferabschnitt
- 12: Versteifungselement
- 13: Innenseite der Wandung
- 14: Stützkörper
- 15: Distanzstück
- 16: Gegenhalter
- 17: Stützkörper des Gegenhalters
- 18: Pufferabschnitt des Gegenhalters
- 19: Öffnung
- 20: Durchgangsöffnung
- 21: zentrales Befestigungselement
- 22: bogenförmige Ausnehmung
- 23: Noppen
- 24: Axial-Lager
- 25: Innentopf
- 26: vertiefter Abschnitt
- 27: radialer Flanschabschnitt
- 28: großvolumige Zusatzfeder
- A: Längsmittelachse

## Patentansprüche

1. Federbein, umfassend eine Schraubenfeder (2), einen Schwingungsdämpfer (3) und einen Lagerkörper (6) zur axialen Abstützung der Schraubenfeder (2) und des Schwingungsdämpfers (3) gegen einen Fahrzeugaufbau,
- wobei der Lagerkörper (6) einen ersten, elastisch ausgebildeten Pufferabschnitt (10) für die Schraubenfeder (2) und einen zweiten, elastisch ausgebildeten Pufferabschnitt (11) für den Schwingungsdämpfer (3) aufweist, und die Pufferabschnitte (10, 11) unabhängig voneinander arbeiten,
- wobei die Pufferabschnitte (10, 11) des Lagerkörpers (6) untereinander verbunden sind, jedoch örtlich getrennt voneinander jeweils gegen den Fahrzeugaufbau anliegen, und
- wobei zur Befestigung des Federbeins (1) an dem Fahrzeugaufbau der Schwingungsdämpfer (3) mittels eines einzigen, zentralen Befestigungselementes (21) mit dem Fahrzeugaufbau verspannbar ist,
**dadurch gekennzeichnet,**
- **daß** der Lagerkörper (6) vor der Montage des Federbeins (1) am Fahrzeugaufbau an dem Federbein (1) befestigt ist und so mit der Schraubenfeder (2) und dem Schwingungsdämpfer (3) eine vormontierte Baueinheit bildet, und
- **daß** der Lagerkörper (6) über die Außenseite einer geneigten konischen Wandung (9) an dem Fahrzeugaufbau zentriert ist, die die Pufferabschnitte (10, 11) verbindet, und die Innenseite (13) der die Pufferabschnitte verbindenden Wandung (9) ebenfalls konisch ausgebildet ist.

2. Federbein nach Anspruch 1, **dadurch gekennzeichnet, daß** der Schwingungsdämpfer (3) eine Kolbenstange (5) und einen Zylinder umfaßt, und daß der Schwingungsdämpfer (3) mit der Kolbenstange (5) gegen den zweiten Pufferabschnitt (11) des Lagerkörpers (6) abgestützt und weiterhin über die Kolbenstange (5) mit dem Fahrzeugaufbau verspannbar ist.

3. Federbein nach Anspruch 1 oder 2, **dadurch gekennzeichnet, daß** ein dem zweiten Pufferabschnitt (11) des Lagerkörpers (6) gegenüberliegend anzuordnender Gegenhalter (16) vorgesehen ist, der ebenfalls einen elastisch ausgebildeten Pufferabschnitt (18) aufweist, wobei im Befestigungszustand an einem Fahrzeugaufbau der zweite Pufferabschnitt (11) des Lagerkörpers (6) und der Pufferabschnitt (18) des Gegenhalters (16) von gegenüberliegenden Seiten gegen einen aufbauseitigen Wandabschnitt (4) anlegbar und mittels des zentralen Befestigungselementes (21) verspannbar sind.

4. Federbein nach einem der Ansprüche 1 bis 3, **dadurch gekennzeichnet, daß** der Lagerkörper (6) im Bereich des zweiten Pufferabschnittes (11) einen Stützkörper (14), vorzugsweise aus Metall, aufweist, über den der Lagerkörper (6) an dem Schwingungsdämpfer (3) axial festgelegt ist.

5. Federbein nach Anspruch 3 oder 4, **dadurch gekennzeichnet, daß** der Gegenhalter (16) einen Stützkörper (17), vorzugsweise aus Metall, umfaßt, an dem der Pufferabschnitt (18) des Gegenhalters (16) befestigt ist, und gegen den im Befestigungszustand das zentrale Befestigungselement (21) anliegt.

6. Federbein nach einem der Ansprüche 1 bis 5, **dadurch gekennzeichnet, daß** die Pufferabschnitte (10; 11; 18) aus Elastomermaterial bestehen.

7. Federbein nach einem der Ansprüche 1 bis 6, **dadurch gekennzeichnet, daß** das zentrale Befestigungselement (21) eine Mutter ist, die auf ein Ende einer Kolbenstange (5) des Schwingungsdämpfers (3) aufgeschraubt wird.

8. Federbein nach Anspruch 7, **dadurch gekennzeichnet, daß** die Kolbenstange (5) sich durch die Stützkörper (14, 17) des Lagerkörpers (6) und des Gegenhalters (16) hindurcherstreckt und zwischen den Stützkörpern (14, 17) ein Distanzstück (15) eingegliedert ist.

9. Federbein nach einem der Ansprüche 1 bis 8, **dadurch gekennzeichnet, daß** der zweite Pufferabschnitt (11) des Lagerkörpers (6) und/oder der Pufferabschnitt (18) des Gegenhalters (16) an ihrer Anlagefläche zur Abstützung gegen den Fahrzeugaufbau mit Ausnehmungen und/oder Vorsprüngen ausgebildet sind.

10. Federbein nach einem der Ansprüche 1 bis 9, **dadurch gekennzeichnet, daß** die beiden Pufferabschnitte (10, 11) des Lagerkörpers (6) über eine Wandung (9) aus Elastomermaterial miteinander verbunden sind, die durch einen Versteifungselement (12), vorzugsweise aus Metall, verstärkt ist.

11. Federbein nach einem der Ansprüche 1 bis 10, **dadurch gekennzeichnet, daß** die Schraubenfeder (2) über ein Axial-Lager (24) gegen den ersten Pufferabschnitt (10) abgestützt ist.

12. Federbein nach einem der Ansprüche 2 bis 11, **dadurch gekennzeichnet, daß** eine Zusatzfeder (28) um die Kolbenstange (5) als Anschlag für den Zylinder des Schwingungsdämpfers (3) angeordnet ist und die Federkräfte der Zusatzfeder (28) nicht über den weicheren zweiten Pufferabschnitt (11), sondern über den ersten Pufferabschnitt (10) geführt sind.

## Claims

1. Suspension strut, including a helical spring (2), a vibration damper (3) and a bearing part (6) for the axial support of the helical spring (2) and the vibration damper (3) against a vehicle body,
- with the bearing part (6) having a first resilient buffer section (10) for the helical spring (2) and a second resilient buffer section (11) for the vibration damper (3), and the buffer sections (10, 11) operating independently of one another,
- with the buffer sections (10, 11) of the bearing part (6) being connected to one another but each abutting against the vehicle body in a manner spatially separated from one another, and
- with it being possible to tension the vibration damper (3) with respect to the vehicle body, for the purpose of securing the suspension strut (1) to the vehicle body, by means of a single central securing element (21),
**characterized**
- **in that**, before the suspension strut (1) is assembled on the vehicle body, the bearing part (6) is secured to the suspension strut (1) and thus forms a pre-assembled structural unit with the helical spring (2) and the vibration damper (3), and
- **in that** the bearing part (6) is centred on the vehicle body by way of the outside of an inclined conical wall (9) which connects the buffer sections (10, 11), and the inside (13) of the wall (9) connecting the buffer sections is also conical in shape.

2. Suspension strut according to Claim 1, **characterized in that** the vibration damper (3) includes a piston rod (5) and a cylinder, and **in that** the vibration damper (3) is supported against the second buffer section (11) of the bearing part (6) by means of the piston rod (5) and furthermore can be tensioned with respect to the vehicle body by way of the piston rod (5).

3. Suspension strut according to Claim 1 or 2, **characterized in that** a bracing means (16) which is to be arranged opposite the second buffer section (11) of the bearing part (6) is provided and also has a resilient buffer section (18), it being possible in the condition secured to a vehicle body for the second buffer section (11) of the bearing part (6) and the buffer section (18) of the bracing means (16) to be made to abut from opposing sides against a wall section (4) on the body and to be tensioned by means of the central securing element (21).

4. Suspension strut according to one of Claims 1 to 3, **characterized in that** the bearing part (6) has in the region of the second buffer section (11) a support part (14), preferably of metal, by way of which the bearing part (6) is axially fixed to the vibration damper (3).

5. Suspension strut according to Claim 3 or 4, **characterized in that** the bracing means (16) includes a support part (17), preferably of metal, to which the buffer section (18) of the bracing means (16) is secured and against which, in the secured condition, the central securing element (21) abuts.

6. Suspension strut according to one of Claims 1 to 5, **characterized in that** the buffer sections (10; 11; 18) are made of elastomer material.

7. Suspension strut according to one of Claims 1 to 6, **characterized in that** the central securing element (21) is a nut which is screwed onto an end of a piston rod (5) of the vibration damper (3).

8. Suspension strut according to Claim 7, **characterized in that** the piston rod (5) extends through the support parts (14, 17) of the bearing part (6) and the bracing means (16), and a spacer (15) is incorporated between the support parts (14, 17).

9. Suspension strut according to one of Claims 1 to 8, **characterized in that** the second buffer section (11) of the bearing part (6) and/or the buffer section (18) of the bracing means (16) are constructed with recesses and/or projections on their respective abutment face, for the purpose of support against the vehicle body.

10. Suspension strut according to one of Claims 1 to 9, **characterized in that** the two buffer sections (10, 11) of the bearing part (6) are connected to one another by way of a wall (9) which is of elastomer material and is reinforced by a stiffening element (12), preferably of metal.

11. Suspension strut according to one of Claims 1 to 10, **characterized in that** the helical spring (2) is supported against the first buffer section (10) by way of an axial bearing (24).

12. Suspension strut according to one of Claims 2 to 11, **characterized in that** an additional spring (28) is arranged around the piston rod (5) as an abutment for the cylinder of the vibration damper (3), and the spring forces of the additional spring (28) are led not through the softer second buffer section (11) but through the first buffer section (10).

## Revendications

1. Jambe de force à ressort comprenant un ressort à boudin (2), un amortisseur d'oscillations (3) et un corps de palier (6) pour le soutien axial du ressort à boudin (2) et de l'amortisseur d'oscillations (3) contre la carrosserie d'un véhicule,
- le corps de palier (6) présentant une première section tampon (10) de configuration souple pour le ressort à boudin (2) et une deuxième section tampon (11) à configuration souple pour l'amortisseur d'oscillations (3) et les sections tampon (10, 11) fonctionnant indépendamment l'une de l'autre,
- les sections tampon (10, 11) du corps de palier (6) étant reliées entre elles, mais reposant cependant contre la carrosserie du véhicule en étant localement séparées l'une de l'autre et
- l'amortisseur d'oscillations (3) pouvant être haubané avec la carrosserie du véhicule au moyen d'un. élément de fixation (21) central unique pour fixer la jambe de force à ressort (1) à la carrosserie du véhicule,
**caractérisée en ce**
- **que** le corps de palier (6) est fixé à la jambe de force à ressort (1) avant le montage de la jambe de force à ressort (1) sur la carrosserie du véhicule et forme ainsi avec le ressort à boudin (2) et l'amortisseur d'oscillations (3) un sous-ensemble prémonté et
- **que** le corps de palier (6) est centré sur la carrosserie du véhicule par le biais du côté extérieur d'une paroi (9) conique inclinée qui relie les sections tampon (10, 11), et le côté intérieur (13) de la paroi (9) qui relie les sections tampon est lui aussi de forme conique.

2. Jambe de force à ressort selon la revendication 1, **caractérisée en ce que** l'amortisseur d'oscillations (3) comprend une tige de piston (5) et un cylindre et que l'amortisseur d'oscillations (3) est soutenu avec la tige de piston (5) contre la deuxième section tampon (11) du corps de palier (6) et peut en plus être haubané avec la carrosserie du véhicule par le biais de la tige de piston (5).

3. Jambe de force à ressort selon la revendication 1 ou 2, **caractérisée en ce qu'**il est prévu une contre-bouterolle (16) à disposer à l'opposé de la deuxième section tampon (11) du corps de palier (6), laquelle présente également une section tampon (18) de configuration souple, la deuxième section tampon (11) du corps de palier (6) et la section tampon (18) de la contre-bouterolle (16), en situation de fixation sur la carrosserie d'un véhicule, pouvant être appliquées par des côtés opposés contre une section de paroi (4) côté carrosserie et pouvant être haubanées au moyen de l'élément de fixation central (21).

4. Jambe de force à ressort selon l'une des revendications 1 à 3, **caractérisée en ce que** le corps de palier (6) présente dans la zone de la première section tampon (11) un corps de soutien (14), de préférence en métal, par le biais duquel le corps de palier (6) est fixé dans le sens axial à l'amortisseur d'oscillations (3).

5. Jambe de force à ressort selon la revendication 3 ou 4, **caractérisée en ce que** la contre-bouterolle (16) comprend un corps de soutien (17), de préférence en métal, auquel est fixée la section tampon (18) de la contre-bouterolle (16) et contre lequel repose l'élément de fixation central (21) en situation de fixation.

6. Jambe de force à ressort selon l'une des revendications 1 à 5, **caractérisée en ce que** les sections tampon (10 ; 11 ; 18) sont en matériau - élastomère.

7. Jambe de force à ressort selon l'une des revendications 1 à 6, **caractérisée en ce que** l'élément de fixation central (21) est un écrou qui est vissé sur une extrémité d'une tige de piston (5) de l'amortisseur d'oscillations (3).

8. Jambe de force à ressort selon la revendication 7, **caractérisée en ce que** la tige de piston (5) s'étend à travers les corps de soutien (14, 17) du corps de palier (6) et de la contre-bouterolle (16) et une entretoise (15) est intercalée entre les corps de soutien (14, 17).

9. Jambe de force à ressort selon l'une des revendications 1 à 8, **caractérisée en ce que** la deuxième section tampon (11) du corps de palier (6) et/ou la section tampon (18) de la contre-bouterolle (16) sont configurées avec des creux et/ou des parties en saillie au niveau de leurs surfaces d'appui destinées à leur soutien contre la carrosserie du véhicule.

10. Jambe de force à ressort selon l'une des revendications 1 à 9, **caractérisée en ce que** les deux sections tampon (10 ; 11) du corps de palier (6) sont reliées ensemble par une paroi (9) en matériau élastomère, laquelle est renforcée par un élément raidisseur (12), de préférence en métal.

11. Jambe de force à ressort selon l'une des revendications 1 à 10, **caractérisée en ce que** le ressort à boudin (2) est soutenu contre la première section tampon (10) par le biais d'un palier axial (24).

12. Jambe de force à ressort selon l'une des revendications 2 à 11, **caractérisée en ce qu'**un ressort supplémentaire (28) est disposé autour de la tige de piston (5) en tant que butée pour le cylindre de l'amortisseur d'oscillations (3) et les forces du ressort supplémentaire (28) ne passent pas par la deuxième section tampon (11) moins dure, mais par la première section tampon (10).
